# EUROPEAN PATENT SPECIFICATION

(11) **EP 4 589 330 B1**
(45) Date of publication and mention of the grant of the patent: **09.12.2026**
(21) Application number: 25174187.2
(22) Date of filing: 18.07.2022
(51) Int. Cl.: G01S 13/00, H04W 72/04, G01S 7/02, H04W 64/00, H04W 72/0453, G01S 13/02, G01S 13/76

(54) **ELECTRONIC DEVICE AND METHOD FOR PERFORMING RANGING THROUGH UWB COMMUNICATION**
ELEKTRONISCHE VORRICHTUNG UND VERFAHREN ZUR DURCHFÜHRUNG VON ENTFERNUNGSMESSUNG DURCH UWB-KOMMUNIKATION
DISPOSITIF ÉLECTRONIQUE ET PROCÉDÉ DE MESURE DE DISTANCE PAR COMMUNICATION UWB

(30) Priority: 27.12.2021 KR 20210188618
(43) Date of publication of application: 23.07.2025
(62) Document number(s) of the earlier application(s) in accordance with Art. 76 EPC: 22185345.0 / 4 202 488
(73) Proprietor: Hyundai Mobis Co., Ltd., Gangnam-gu Seoul 06141 (KR)
(72) Inventor: LIM, Jong Chul, Gyeonggi-do (KR)
(74) Representative: Vossius & Partner Patentanwälte Rechtsanwälte mbB

(56) References cited:
- US-A1- 2019 208 387
- US-A1- 2019 373 621

## Description

### BACKGROUND

### Field

Exemplary embodiments of the present disclosure relate to an electronic device and a method for performing ranging through Ultra-Wide Band (UWB) communication.

### DISCUSSION OF THE BACKGROUND

A smart key system is a system that allows opening or closing of vehicle doors and externally starting a vehicle without inserting, by a driver, a separate key into a vehicle's key box or performing any special manipulation for operation. The smart key system is operated by ranging a smart key through wireless communication such as an Ultra-Wide Band (UWB) communication, and in addition to a fob key, various electronic apparatuses, which support wireless communication, such as smartphones, wearable devices, tablet personal computers (PCs), etc. can be used as smart keys.

Meanwhile, in general, the number of smart keys that can simultaneously perform ranging through the smart key system is limited. Accordingly, when a new smart key is detected while the smart key system performs ranging on all smart keys that can simultaneously perform ranging, in order to perform ranging on the new smart key entering the communication area, one of the smart keys that perform ranging should be selected to be disconnected from the ranging, but there is a problem in that the new smart key cannot perform smoothly ranging due to lack of a disconnection criterion for selecting the smart key.

The related art of the present disclosure is disclosed in Korean Patent Application No. 10-2021-0137840 published on November 18, 2021 and entitled "UWB System".

US 2019/0373621 A1 relates to ranging between a user equipment and a fixed reference node.

US 2019/0208387 A1 discloses vehicle-to-vehicle communication in which an efficient ranging protocol allows efficient ranging-assisted vehicle positioning.

### SUMMARY

The present disclosure has been made to solve the above problems, and an object of the present disclosure according to an embodiment is to provide an electronic device and a method for performing ranging through Ultra-Wide Band (UWB) communication, and when a new electronic apparatus is detected while all channels supported by an anchor provided in a UWB communication area are occupied, the electronic device and method are capable of efficiently selecting and recovering one of the channels being occupied and assigning the recovered channel to the newly detected electronic apparatus.

The present invention is defined by independent claims 1 and 3; the dependent claims describe embodiments of the present invention.

### BRIEF DESCRIPTION OF THE DRAWINGS

FIG. 1 is a block diagram illustrating an electronic device that performs ranging through Ultra-Wide Band (UWB) communication according to an embodiment of the present disclosure.
FIG. 2 is an exemplary diagram illustrating a vehicle to which the electronic device for performing ranging through UWB communication according to the embodiment of the present disclosure is applied.
FIGS. 3 to 5 are flowcharts illustrating a method of operating an electronic device that performs ranging through UWB communication according to an embodiment of the present disclosure.

### DETAILED DESCRIPTION OF THE ILLUSTRATED EMBODIMENTS

As is traditional in the corresponding field, some exemplary embodiments may be illustrated in the drawings in terms of functional blocks, units, and/or modules. Those of ordinary skill in the art will appreciate that these block, units, and/or modules are physically implemented by electronic (or optical) circuits such as logic circuits, discrete components, processors, hard-wired circuits, memory elements, wiring connections, and the like. When the blocks, units, and/or modules are implemented by processors or similar hardware, they may be programmed and controlled using software (e.g., code) to perform various functions discussed herein. Alternatively, each block, unit, and/or module may be implemented by dedicated hardware or as a combination of dedicated hardware to perform some functions and a processor (e.g., one or more programmed processors and associated circuitry) to perform other functions. Each block, unit, and/or module of some exemplary embodiments may be physically separated into two or more interacting and discrete blocks, units, and/or modules without departing from the scope of the inventive concept.

Hereinafter, an electronic device and a method for performing ranging through Ultra-Wide Band (UWB) communication will be described below with reference to the accompanying drawings through various exemplary embodiments.

For clarity and convenience in description, thicknesses of lines, sizes of constituent elements, and the like may be illustrated in an exaggerated manner in the drawings. In addition, terms described below are defined by considering functions according to the present disclosure and may vary according to the intention of a user or a manager or according to the common practices in the art. Therefore, definitions of the terms should be defined in light of details disclosed throughout the present specification.

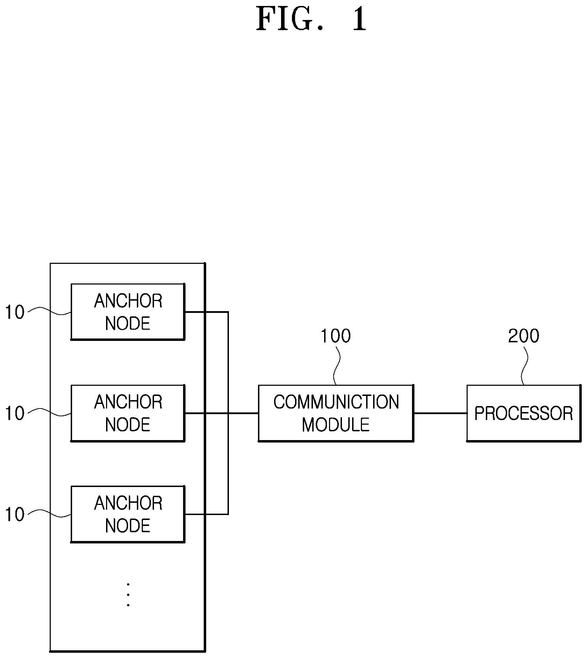

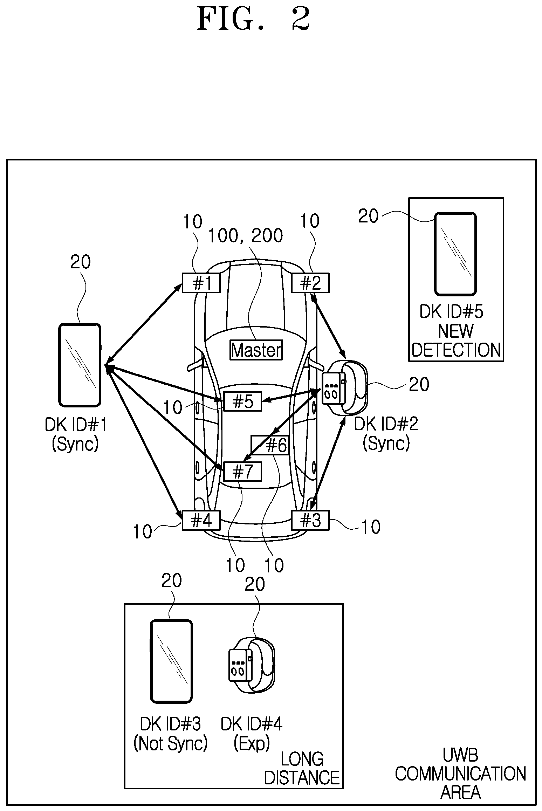

FIG. 1 is a block diagram illustrating an electronic device that performs ranging through UWB communication according to an embodiment of the present disclosure. FIG. 2 is an exemplary diagram illustrating a vehicle to which the electronic device for performing ranging through UWB communication according to the embodiment of the present disclosure is applied.

Referring to FIGS. 1 and 2, the electronic device for performing ranging through UWB communication according to the embodiment of the present disclosure may include a communication module 100 and a processor 200.

The communication module 100 may communicate with a plurality of anchor nodes 10 provided in a predefined UWB communication area. The plurality of anchor nodes 10 may be provided to be spaced apart from each other in the UWB communication area. The anchor node 10 may be an anchor that performs communication through UWB communication. The anchor node 10 may perform ranging on a moving node 20 located in the UWB communication area. The ranging may mean an operation in which the anchor node 10 measures a position of the moving node 20. The moving node 20 may include an electronic device capable of performing communication through UWB communication. For example, the moving node 20 may be a smartphone, a tablet, personal computer (PC), a wearable device, or the like. Referring to FIG. 2, the plurality of anchor nodes 10 may be provided to space apart from each other inside the vehicle, and may perform ranging on the moving node 20 such as a smartphone, a tablet, a wearable device, or the like operated by a digital key.

The processor 200 may receive state information of each moving node 20 occupying channels provided by the plurality of anchor nodes 10 to perform ranging on the plurality of anchor nodes 10 through the communication module 100.

Herein, the channel may have a time-division concept of a wireless communication path connecting the anchor node 10 and the moving node 20. That is, the channel may be a communication time between the anchor node 10 and an anchor node 10 assigned to each of the moving nodes 20 for performing ranging. The number of moving nodes 20 with which the anchor node 10 may communicate, that is, the number of channels, is limited. Channels of the plurality of anchor nodes 10 may be synchronized with each other. That is, the channel of each anchor node 10 may be occupied by the same moving node 20. For example, when a first moving node occupies a channel of a first anchor node, the first moving node also occupies a channel of the anchor node other than the first anchor node.

Meanwhile, the state information may be a state of each moving node 20 occupying a channel provided by the anchor node 10. The state of the moving node 20 may be divided into a state in which ranging is attempted by the anchor node 10 but has never performed (hereinafter, Not Sync), a state in which ranging is performed by the anchor node 10 (hereinafter, Sync), and a state in which ranging is stopped (hereinafter, Expiration) because ranging is not performed for a predetermined time (when ranging fails for a predetermined time, the anchor may stop ranging of a corresponding moving node by itself to minimize power consumption). For example, assuming that an anchor node A performs ranging on moving nodes a and b, attempts ranging on a moving node c, and has stopped ranging from a moving node d, the anchor node A may transmit state information including the moving nodes a and b: Sync, the moving node c: Not Sync, and the moving node d: Expiration.

The processor 200 sets a priority between the moving nodes 20 occupying a channel based on a state information of the moving node 20 received from each of the plurality of anchor nodes 10. The processor 200 may indirectly estimate a degree to which the moving node 20 is spaced apart from a center of the UWB communication area through the state information of the moving node 20 received from each of the plurality of anchor nodes 10, or may indirectly determine an approach intention of the moving node 20, and may set the priority between the moving nodes 20 using an estimated or determined result.

According to an embodiment, the processor 200 may identify the moving node 20, on which ranging has never performed by the anchor node 10, among the moving nodes 20 occupying the channel as the first moving node, and may set the priority of the first moving node 20 lower than the priorities of other moving nodes 20. That is, the processor 200 may set the priority of the moving node 20 in which all state information received from the plurality of anchor nodes 10 is Not Sync to be the lowest. For example, referring to FIG. 2, a priority of the moving nodes 20 (#3) in which state information received from all of a plurality of anchor nodes 10 is Not Sync may be set to be lower than priorities of other moving nodes 20 (#1, #2, and #4).

According to an embodiment, the processor 200 may identify the moving node 20 on which ranging is performed by one or more anchor nodes 10 among the moving nodes 20 occupying the channel as the second moving node, and may set the priority of the second moving node 20 higher than the priorities of other moving nodes 20. That is, the processor 200 may set a priority of the moving node 20 in which any Sync state information is received to be higher than a priority of the moving node 20 in which any Sync state information is not received. For example, referring to FIG. 2, the priorities of the moving nodes 20 (#1 and #2) on which ranging is performed by one or more anchor nodes 10 may be set to be higher than the priorities of the moving nodes 20 (#3 and #4) on which ranging is not performed.

According to an embodiment, the processor 200 may calculate the number of ranging anchors that is the number of anchor nodes 10 that perform ranging on the second moving node with respect to each of the second moving nodes, and may set a priority between the second moving nodes based on a calculated number of ranging anchors. According to an embodiment, the processor 200 may set a priority of the moving node 20 having a relatively large number of ranging anchors to be higher than a priority of the moving node 20 having a relatively small number of ranging anchors. That is, the processor 200 may determine that user's access and use intention are higher as the number of ranging anchors increases, and may set the priority of a corresponding moving node 20 to be high. For example, referring to FIG. 2, when the total number of anchor nodes 10 is 7, the processor 200 may set the priority of the moving node 20 (#1) having four anchor nodes 10 that perform ranging on the moving node 20 (#1) lower than the priority of the moving node 20 (#2) having five anchor nodes 10 that perform ranging on the moving node 20 (#2). The processor 200 may calculate the number of ranging anchors for each of the second moving nodes based on the state information received from each anchor node 10.

According to an embodiment, the processor 200 identifies the moving nodes 20 excluding the first and second moving nodes among the moving nodes 20 occupying the channel as third moving nodes, calculates the number of expired anchors that are the number of anchor nodes 10 that have stopped ranging because ranging is not performed for a predetermined time while ranging is performed on the third moving node with respect to each of the third moving nodes, and sets a priority between the third movement nodes based on the calculated number of expired anchors. According to an embodiment, the processor 200 may set the priority of the moving node 20 having a relatively large number of expired anchors to be lower than the priority of the moving node 20 having a relatively small number of expired anchors. That is, the processor 200 determines that the user's access and use intention are lower as the number of expired anchors increases, and thus may set the priority of a corresponding moving node 20 to be low. For example, when the total number of anchor nodes 10 is 7, the processor 200 may set the priority of the moving nodes 20 having five number of anchor nodes 10 that is stopped ranging because ranging is not performed for a predetermined time while ranging is performed on the moving nodes 20 to be lower than the priority of the moving nodes 20 having three number of anchor nodes 10 that is stopped ranging because ranging is not performed for a predetermined time while ranging is performed on the moving nodes 20. The processor 200 may calculate the number of expired anchors for each of the third moving nodes based on the state information received from each anchor node 10.

The processor 200 recovers one of channels being occupied by the moving node 20 based on the set priority and being occupied by the moving node 20 set to the lowest priority.

The processor 200 may recover one of channels when a new moving node 20 is detected in the UWB communication area while channels are all occupied by the moving node 20.

As described above, when a new electronic apparatus is detected while all channels supported by an anchor provided in a UWB communication area are occupied, one of channels is efficiently selected and recovered, and the recovered channel is assigned to a newly detected electronic apparatus, thereby the present disclosure can smoothly perform ranging on the newly detected electronic apparatus.

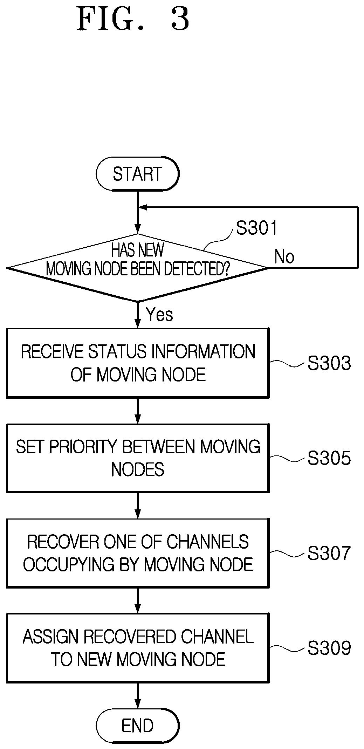

FIG. 3 is a first flowchart illustrating a method of operating an electronic device that performs ranging through UWB communication according to an embodiment of the present disclosure.

Hereinafter, a process in which the processor 200 recovers a channel being occupied by the moving node 20 and assigns the channel to a new moving node 20 will be described with reference to FIG. 3.

First, the processor 200 may determine whether the new moving node 20 is detected in the UWB communication area (S301). The processor 200 may detect the moving node 20 through a plurality of anchor nodes 10 provided in the UWB communication area.

When the new moving node 20 is detected in the UWB communication area, the processor 200 may receive state information of the moving node 20 occupying a channel provided by the anchor node 10 from a plurality of anchor nodes 10 provided in the UWB communication area (S303).

Subsequently, the processor 200 may set a priority between the moving nodes 20 occupying the channel based on the state information of the moving node 20 received from the plurality of anchor nodes 10 (S305). A detailed process of setting, by the processor 200, a priority between the moving nodes 20 will be described below.

Subsequently, and according to the invention, the processor 200 recovers one of channels being occupied by the moving node 20 based on a set priority (S307) and being occupied by the moving node 20 set to the lowest priority.

Subsequently, the processor 200 may assign a recovered channel to a new moving node 20 (S309).

Meanwhile, the processor 200 may assign a channel to the new moving node 20 and set a priority between the moving nodes 20 occupying the channel again, and may recover the channel assigned to the new moving node 20 and reassign the channel to the recovered moving node 20 when the priority of the new moving node 20 is lower than the priority of the moving node 20 from which the channel has recovered.

In the above-described embodiment, steps S303 and S305 are described as being performed after step S301, but steps S303 and S305 may be performed before step S301. That is, the processor 200 sets a priority between the moving nodes 20 before the new moving node 20 is detected, recovers a channel according to the priority in response to the detection of the new moving node 20, and may assign the recovered channel to the new moving node 20. In this case, the processor 200 may set the priority between the moving nodes 20 at a preset period.

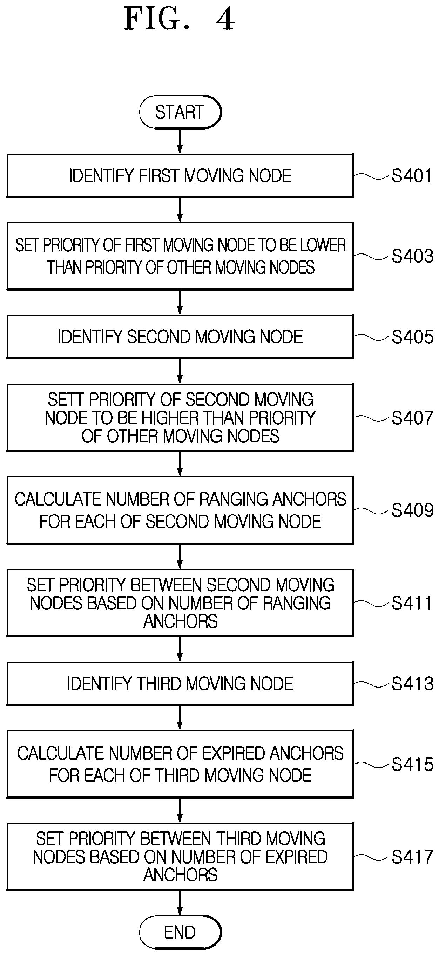

FIG. 4 is a second flowchart illustrating a method of operating an electronic device that performs ranging through UWB communication according to an embodiment of the present disclosure.

Hereinafter, a process in which the processor 200 sets a priority between the moving nodes 20 occupying the channel will be described with reference to FIG. 4.

First, the processor 200 may identify the moving node 20 on which ranging has never performed by the anchor node 10 among the moving nodes 20 occupying the channel as a first moving node (S401).

Subsequently, the processor 200 may set a priority of the first moving node to be lower than priorities of other moving nodes 20 (S403).

Subsequently, the processor 200 may identify the moving node 20 on which ranging is performed by one or more anchor nodes 10 among the moving nodes 20 occupying the channel as a second moving node (S405).

Subsequently, the processor 200 may set a priority of the second moving node to be higher than priorities of other moving nodes 20 (S407).

Subsequently, the processor 200 may calculate the number of ranging anchors for each of the second moving nodes (S409).

Subsequently, the processor 200 sets a priority between the second moving nodes based on the number of ranging anchors (S411). The processor 200 may set a higher priority as the number of ranging anchors increases. For example, assuming that the total number of anchor nodes 10 included in the UWB communication area is 7, the processor 200 may set a priority of the moving node 20 having 7 ranging anchors to be higher than the priority of the moving node 20 having 6 ranging anchors.

Subsequently, the processor 200 may identify the moving nodes 20 excluding the first and second moving nodes among the moving nodes 20 occupying the channels as third moving nodes (S413). That is, the processor 200 may identify the moving node 20, on which ranging is not performed by the anchor node 10 but has performed at least once or more, as the third moving node.

Subsequently, the processor 200 may calculate the number of expired anchors for each of the third moving nodes (S415).

Subsequently, the processor 200 may set a priority between the third moving nodes based on the number of expired anchors (S417). The processor 200 may set a higher priority as the number of expired anchors decreases. For example, assuming that the total number of anchor nodes 10 included in the UWB communication area is 7, the processor 200 may set the priority of the moving node 20 having 0 expired anchor to be higher than the priority of the moving node 20 having 1 expired anchor.

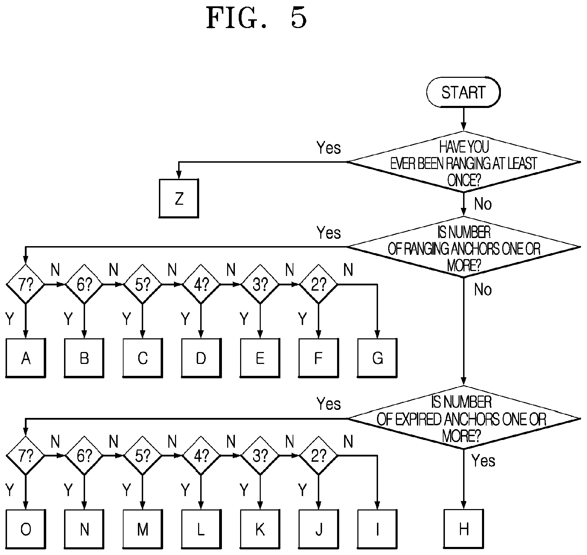

FIG. 5 is a third flowchart illustrating a method of operating an electronic device that performs ranging through UWB communication according to an embodiment of the present disclosure.

Hereinafter, a process of setting a priority of each moving node 20 in a case where seven anchor nodes 10 are totally provided will be described with reference to FIG. 5.

First, the processor 200 may determine whether ranging has ever performed on a target moving node 20 by the anchor node 10.

When it is determined that ranging has not performed on the target moving node 20 by the anchor node 10, the processor 200 may set a priority of the target moving node 20 to Z which is the lowest priority.

On the other hand, when it is determined that ranging has performed on the target moving node 20 by the anchor node 10 even once, the processor 200 may determine whether the number of anchor nodes 10 ranging the target moving node 20 is one or more.

When it is determined that the number of anchor nodes 10 performing ranging on the target moving node 20 is one or more, the processor 200 may set the priority of the target moving node 20 according to the number of anchor nodes 10 (the number of ranging anchors) performing ranging on the target moving node 20.

The processor 200 may set the priority of the target moving node 20 to A which is the highest priority when the number of ranging anchors is 7, the processor 200 may set the priority of the target moving node 20 to B which is one lower level than A when the number of ranging anchors is 6, the processor 200 may set the priority of the target moving node 20 to C which is one lower level than B when the number of ranging anchors is 5, the processor 200 may set the priority of the target moving node 20 to D which is one lower level than C when the number of ranging anchors is 4, the processor 200 may set the priority of the target moving node 20 to E which is one lower level than D when the number of ranging anchors is 3, the processor 200 may set the priority of the target moving node 20 to F which is one lower level than E when the number of ranging anchors is 2, and the processor 200 may set the priority of the target moving node 20 to G which is one lower level than F when the number of ranging anchors is 1.

Meanwhile, when it is determined that the number of anchor nodes 10 performing ranging on the target moving node 20 is not one or more, the processor 200 may set the priority of the target moving node 20 according to the number of anchor nodes 10 (the number of expired anchors) that have stopped the ranging because ranging is not performed for a predetermined time.

The processor 200 may set the priority of the target moving node 20 to H which is one lower level than G when the number of expired anchors is 0, the processor 200 may set the priority of the target moving node 20 to I which is one lower level than H when the number of expired anchors is 1, the processor 200 may set the priority of the target moving node 20 to J which is one lower level than I when the number of expired anchors is 2, the processor 200 may set the priority of the target moving node 20 to K which is one lower level than J when the number of expired anchors is 3, the processor 200 may set the priority of the target moving node 20 to L which is one lower level than J when the number of expired anchors is 4, the processor 200 may set the priority of the target moving node 20 to M which is one lower level than L when the number of expired anchors is 5, the processor 200 may set the priority of the target moving node 20 to N which is one lower level than M when the number of expired anchors is 6, and the processor 200 may set the priority of the target moving node 20 to O which is one lower level than N when the number of expired anchors is 7.

As described above, an electronic device and a method for performing ranging through UWB communication according to an embodiment of the present disclosure may efficiently select and recover one of channels being occupied, and assign the recovered channel to a newly sensed electronic apparatus, thereby smoothly performing ranging on the newly detected electronic apparatus when all channels supported by an anchor provided in a UWB communication area are occupied and the new electronic apparatus is detected.

The implementation described above in the present specification may be performed by, for example, a method or a process, an apparatus, a software program, a data stream, or a signal. Although being discussed only in the context of single form implementation (for example, being discussed only as a method), the discussed features may be implemented even as another form (for example, an apparatus, or a program). The apparatus may be implemented as proper hardware, software, or firmware. The method may be implemented as, for example, an apparatus, such as a processor generally indicating a processing apparatus including a computer, a microprocessor, an integrated circuit, or a programmable logic apparatus. The processor also includes a communication apparatus, such as a computer, a cellular phone, a portable/personal digital assistant (PDA), and other devices which facilitate information communication between end users.

## Claims

1. A method of operating one or more anchors to perform ranging through Ultra-Wide Band, UWB, communication, the method comprising:
receiving UWB communication data for ranging on the one or more anchors from a device;
setting a state of a first anchor of the one or more anchors which receives the UWB communication data from the device into a 'In sync' mode; and
setting a state of a second anchor of the one or more anchors which fails to perform ranging into a 'Not in sync' mode,
wherein the 'Not in sync' is set based on time information,
wherein the device includes a priority for ranging of the device,
**characterized in that** the method further comprises
setting the priority between one or more devices associated with the one or more anchors, wherein the priorities for the one or more devices are generated based on a number of ranging anchors; and
recovering a channel provided by the one or more anchors for ranging and being occupied by a device having the lowest priority based on the set priority.

2. The method of claim 1,
wherein the setting of the priority further comprises identifying a moving node on which ranging has stopped for a predetermined time as a third moving node, calculating a number of expired anchors for the third moving node, and setting a priority between a plurality of third moving nodes based on the number of expired anchors.

3. An electronic device that performs ranging through Ultra Wide Band, UWB, communication, the electronic device comprising:
a communication module (100) configured to communicate with one or more anchors; and
a processor (200) configured to:
receive UWB communication data for ranging on the one or more anchors from a device;
set a state of a first anchor of the one or more anchors which receives the UWB communication data from the device into a 'In sync' mode; and
set a state of a second anchor of the one or more anchors which fails to perform ranging into a 'Not in sync' mode,
wherein the 'Not in sync' is set based on time information,
wherein the device includes a priority for ranging of the device,
**characterized in that** the processor is further configured to
set the priority between one or more devices associated with the one or more anchors, wherein the priorities for the one or more devices are generated based on a number of ranging anchors; and
recover a channel provided by the one or more anchors for ranging and being occupied by a device having the lowest priority based on the set priority.

4. The electronic device of claim 3,
wherein the setting of the priority further comprises identifying a moving node on which ranging has stopped for a predetermined time as a third moving node, calculating a number of expired anchors for the third moving node, and setting a priority between a plurality of third moving nodes based on the number of expired anchors.

## Patentansprüche

1. Verfahren für den Betrieb eines oder mehrerer Anker zur Durchführung einer Entfernungsmessung durch Ultrabreitband-, UWB-, Kommunikation, wobei das Verfahren aufweist:
Empfangen von UWB-Kommunikationsdaten zur Entfernungsmessung an dem einen oder den mehreren Ankern von einem Gerät;
Einstellen eines Zustands eines ersten Ankers unter den einen oder mehreren Ankern, der die UWB-Kommunikationsdaten vom Gerät empfängt, in einen "In sync"-Modus; und
Einstellen eines Zustands eines zweiten Ankers unter den einen oder mehreren Ankern, bei dem die Entfernungsmessung fehlschlägt, in einen "Not in sync"-Modus,
wobei "Not in sync" auf der Grundlage von Zeitinformationen festgelegt wird,
wobei das Gerät eine Priorität für die Entfernungsmessung der Vorrichtung aufweist,
**dadurch gekennzeichnet, dass** das Verfahren ferner aufweist:
Festlegen der Priorität zwischen einem oder mehreren Geräten, die den einen oder mehreren Ankern zugeordnet sind, wobei die Prioritäten für das eine oder die mehreren Geräte auf der Grundlage einer Anzahl von Entfernungsmessankern generiert werden; und
Rückgewinnen eines von dem einen oder mehreren Ankern zur Entfernungsmessung bereitgestellten Kanals, der von einem Gerät mit der niedrigsten Priorität basierend auf der festgelegten Priorität belegt wird.

2. Verfahren nach Anspruch 1,
wobei das Festlegen der Priorität ferner das Identifizieren eines sich bewegenden Knotens aufweist, bei dem die Entfernungsmessung für eine vorbestimmte Zeit unterbrochen wurde, als dritten sich bewegenden Knoten, das Berechnen einer Anzahl abgelaufener Anker für den dritten sich bewegenden Knoten und das Festlegen einer Priorität zwischen mehreren dritten sich bewegenden Knoten basierend auf der Anzahl der abgelaufenen Anker.

3. Elektronische Vorrichtung, das eine Entfernungsmessung durch Ultrabreitband-, UWB-, Kommunikation durchführt, wobei die elektronische Vorrichtung aufweist:
ein Kommunikationsmodul (100), das so konfiguriert ist, dass es mit einem oder mehreren Ankern kommuniziert; und
einen Prozessor (200), der so konfiguriert ist, dass er:
UWB-Kommunikationsdaten zur Entfernungsmessung an dem einen oder den mehreren Ankern von einem Gerät empfängt;
einen Zustand eines ersten Ankers des einen oder mehrerer Anker, der die UWB-Kommunikationsdaten von dem Gerät empfängt, in einen "In sync"-Modus versetzt; und
einen Zustand eines zweiten Ankers des einen oder mehrerer Anker, der die Entfernungsmessung nicht durchführen kann, in einen "Not in sync" Modus versetzt,
wobei "Not in sync" auf der Grundlage von Zeitinformationen festgelegt wird,
wobei das Gerät eine Priorität für die Entfernungsmessung des Geräts aufweist,
**dadurch gekennzeichnet, dass** der Prozessor ferner konfiguriert ist,
die Priorität zwischen einem oder mehreren Geräten festzulegen, die den einen oder mehreren Ankern zugeordnet ist, wobei die Prioritäten für das eine oder die mehreren Geräte auf der Grundlage einer Anzahl von Entfernungsmessankern generiert werden; und
einen von dem einen oder mehreren Ankern zur Entfernungsmessung bereitgestellten Kanal rückzugewinnen, der von einem Gerät mit der niedrigsten Priorität basierend auf der festgelegten Priorität belegt wird.

4. Elektronische Vorrichtung nach Anspruch 3,
wobei das Festlegen der Priorität ferner das Identifizieren eines sich bewegenden Knotens aufweist, bei dem die Entfernungsmessung für eine vorbestimmte Zeit unterbrochen wurde, als dritten sich bewegenden Knoten, das Berechnen einer Anzahl abgelaufener Anker für den dritten sich bewegenden Knoten und das Festlegen einer Priorität zwischen mehreren dritter sich bewegender Knoten auf der Grundlage der Anzahl abgelaufener Anker.

## Revendications

1. Procédé de fonctionnement d'une ou de plusieurs ancres pour effectuer une mesure de distance au moyen d'une communication à bande ultralarge, UWB, le procédé comprenant :
la réception, en provenance d'un dispositif, de données de communication UWB pour la mesure de distance au niveau de la ou des ancres ;
le réglage, sur un mode « Synchronisé », d'un état d'une première ancre de la ou des ancres qui reçoit les données de communication UWB en provenance du dispositif ; et
le réglage, sur un mode « Non synchronisé », d'un état d'une deuxième ancre de la ou des ancres qui ne parvient pas à effectuer la mesure de distance,
dans lequel le mode « Non synchronisé » est réglé sur la base d'informations temporelles,
dans lequel le dispositif comprend une priorité pour la mesure de distance du dispositif,
**caractérisé en ce que** le procédé comprend en outre
la définition de la priorité entre un ou plusieurs dispositifs associés à la ou aux ancres, dans lequel les priorités pour le ou les dispositifs sont générées sur la base d'un nombre d'ancres de mesure de distance ; et
la récupération, sur la base de la priorité définie, d'un canal fourni par la ou les ancres pour la mesure de distance et occupé par un dispositif ayant la priorité la plus faible.

2. Procédé selon la revendication 1,
dans lequel la définition de la priorité comprend en outre l'identification d'un nœud mobile sur lequel la mesure de distance s'est arrêtée pendant une durée prédéterminée en tant que troisième nœud mobile, le calcul d'un nombre d'ancres expirées pour le troisième nœud mobile, et la définition d'une priorité entre une pluralité de troisièmes nœuds mobiles sur la base du nombre d'ancres expirées.

3. Dispositif électronique qui effectue une mesure de distance au moyen d'une communication à bande ultralarge, UWB, le dispositif électronique comprenant :
un module de communication (100) configuré pour communiquer avec une ou plusieurs ancres ; et
un processeur (200) configuré pour :
recevoir, en provenance d'un dispositif, des données de communication UWB pour la mesure de distance au niveau de la ou des ancres ;
régler, sur un mode « Synchronisé », un état d'une première ancre de la ou des ancres qui reçoit les données de communication UWB en provenance du dispositif ; et
régler, sur un mode « Non synchronisé », un état d'une deuxième ancre de la ou des ancres qui ne parvient pas à effectuer la mesure de distance,
dans lequel le mode « Non synchronisé » est réglé sur la base d'informations temporelles,
dans lequel le dispositif comprend une priorité pour la mesure de distance du dispositif,
**caractérisé en ce que** le processeur est en outre configuré pour
définir la priorité entre un ou plusieurs dispositifs associés à la ou aux ancres, dans lequel les priorités pour le ou les dispositifs sont générées sur la base d'un nombre d'ancres de mesure de distance ; et
récupérer, sur la base de la priorité définie, un canal fourni par la ou les ancres pour la mesure de distance et occupé par un dispositif ayant la priorité la plus faible.

4. Dispositif électronique selon la revendication 3,
dans lequel la définition de la priorité comprend en outre l'identification d'un nœud mobile sur lequel la mesure de distance s'est arrêtée pendant une durée prédéterminée en tant que troisième nœud mobile, le calcul d'un nombre d'ancres expirées pour le troisième nœud mobile, et la définition d'une priorité entre une pluralité de troisièmes nœuds mobiles sur la base du nombre d'ancres expirées.
